# EUROPEAN PATENT SPECIFICATION

(11) **EP 2 258 765 B1**
(45) Date of publication and mention of the grant of the patent: **28.08.2013**
(21) Application number: 09720486.1
(22) Date of filing: 09.03.2009
(51) Int. Cl.: C08L 15/00, B60C 1/00, B60C 11/00, C08C 19/22, C08K 3/04, C08K 3/36, C08K 5/548, C08L 21/00

(54) **RUBBER COMPOSITION FOR TIRE BASE RUBBER COMPOSITION, AND PNEUMATIC TIRE MADE USING SAID RUBBER COMPOSITION**
KAUTSCHUKZUSAMMENSETZUNG FÜR REIFENBASISKAUTSCHUKZUSAMMENSETZUNG UND UNTER VERWENDUNG DER KAUTSCHUKZUSAMMENSETZUNG HERGESTELLTER LUFTREIFEN
COMPOSITION DE CAOUTCHOUC POUR COMPOSITION DE CAOUTCHOUC DE BASE DE PNEU ET BANDAGE PNEUMATIQUE UTILISANT LADITE COMPOSITION DE CAOUTCHOUC

(30) Priority: 10.03.2008 JP 2008060260
(43) Date of publication of application: 08.12.2010
(73) Proprietor: Bridgestone Corporation, Tokyo 104-8340 (JP)
(72) Inventor: ISHIKAWA, Satoshi, Kodaira-shi Tokyo 187-8531 (JP); KIMURA, Takumi, Kodaira-shi Tokyo 187-8531 (JP)
(74) Representative: Waldren, Robin Michael
(86) International application number: PCT/JP2009/054440
(87) International publication number: WO 2009/113499

(56) References cited:
- EP-A1- 1 457 501
- WO-A1-2007/019561
- JP-A- 2000 017 107
- JP-A- 2003 147 124
- JP-A- 2004 018 795
- JP-A- 2004 168 903
- JP-A- 2006 022 288
- JP-A- 2006 036 822
- JP-A- 2006 137 858
- JP-A- 2006 232 917
- JP-A- 2006 257 112
- JP-A- 2006 282 964
- JP-A- 2007 119 628

## Description

### Technical Field

The present invention relates to a rubber composition for a tire base rubber and a pneumatic tire using the rubber composition. To be more specific, the present invention relates to a rubber composition including a modified polybutadiene rubber and silica having a specific particle diameter, the rubber composition being capable of providing a pneumatic tire which is excellent in fracture property and allows for a great reduction in rolling resistance, and a pneumatic tire having the above-mentioned characteristics made using the rubber composition as a base rubber.

### Background Art

As the decrease in the fuel cost is required for automobiles recently, a rubber material providing a combination of a small rolling resistance, excellent abrasion resistance and excellent steering stability which is typically expressed by excellent wet skid resistance is desired as the rubber material for tires.
Meanwhile, there has been conventionally used a cap/base structure in which functions of a tread part of a tire are separated by providing a cap part, which comes into direct contact with a road surface and thus requires abrasion resistance, and a base part for preventing the tire from generating heat at the inner side of the cap part, which has small hysteresis loss as compared to the cap part.
As for a rubber material for reducing the hysteresis loss of a vulcanized rubber, there is known a natural rubber, a polyisoprene rubber, a polybutadiene rubber, or the like. However, there is a problem in that the use of such rubber material for the cap part reduces wet skid resistance.
In the above-mentioned rubber components, a polybutadiene rubber having a cis-1,4-bond content of 90 mol% or more in a conjugated diene portion is most preferred in order to reduce hysteresis loss. However, an increase in the use amount of the polybutadiene rubber in the rubber component reduces fracture property, and hence may cause a problem due to low fracture property in the case where a cap part suffers cuts and the cuts reach the base part or in the case where a base part is exposed by abrasion of a cap, for example. Accordingly, also in a base rubber, it is one of critical issues to achieve an improvement in fracture property while reducing hysteresis loss.

A method has been recently proposed in which a rubber composition blended with silica or a mixture of silica and carbon black as a reinforcing material is used for the rubber material for a tire. A tire tread blended with silica or a mixture of silica and carbon black has small rolling resistance and shows good steering stability performance typified by wet skid resistance. On the other hand, there is a problem in that a vulcanized product exhibits low tensile strength and abrasion resistance. By the way, a styrene-butadiene copolymer provides a rubber material for a tire excellent in abrasion resistance and fracture property in a composition using carbon black as a reinforcing material, but exhibits a poor improvement effect in a composition using silica as a reinforcing material.
In order to improve the tensile strength and abrasion resistance of a vulcanized product blended with silica or a mixture of silica and carbon black, various rubber compositions each including a modified polymer into which a functional group having an affinity with silica is introduced have been proposed.

The use of the above-mentioned modified polymer in a composition blended with silica or a mixture of silica and carbon black leads to some degree of improvement in physical properties. However, the tensile strength and abrasion resistance of the vulcanized product have not been sufficiently improved yet, and in particular, a reduction in hysteresis loss has not been sufficiently attained in accordance with an increasing proportion of carbon black in the case of blending a mixture of silica and carbon black.
Meanwhile, a polymer into which an amino group is introduced is known as a modified polymer effective in each of a carbon black blend and a silica blend. As for the carbon black blend, for example, there has been proposed a polymer obtained by introducing an amino group into a polymerization end using a lithium amide initiator (see, for example, Patent Document 1). As for the silica blend, for example, there has been proposed a diene-based rubber into which an amino group is introduced (see, for example, Patent Document 2).
The use of each of polymers obtained by those methods contributes to some degree of improvement in a variety of physical properties in each of the carbon black blend and the silica blend. However, each of the above-mentioned documents mainly describes in detail a method of introducing an amino group into a polymer, but merely mentions general information about a relationship between the structure of the polymer itself and each performance.
Further, in order to further reduce rolling resistance, the particle diameter of carbon black or silica as a filler may be increased to reduce hysteresis loss and to reduce rolling resistance. However, there is a problem in that abrasion resistance reduces simultaneously.

Patent Document 1: Japanese Patent Application Laid-Open No.053616/1995
Patent Document 2: Japanese Patent Application Laid-Open No.

EP 1457501 discloses a rubber comprising silicon and amine containing fonctional groups. WO 2007/019561 discloses compositions comprising a rubber copolymer/polymer and at least one resin.

### Disclosure of the Invention

### Problem to be solved by the Invention

In view of such circumstances, an object of the present invention is to provide a rubber composition for a tire base rubber capable of providing a pneumatic tire which is excellent in fracture property and can have greatly reduced rolling resistance, and a pneumatic tire having the above-mentioned characteristics using the rubber composition as a base rubber.

The inventors of the present invention have made extensive studies in order to achieve the above-mentioned obj ect. As a result, the inventors have found that the object can be achieved by a rubber composition including a specific modified butadiene polymer and silica having a specific particle diameter. The present invention has been completed based on such finding.
That is, the present invention provides:
[1] a rubber composition, including: (A) a rubber component including an amine-based functional group modified polybutadiene rubber; and (B) silica having a cetyltrimethylammonium bromide (CTAB) adsorption specific surface area of 50 to 120 (m²/g) and having a nitrogen adsorption specific surface area (N₂SA), which is determined by a BET method, of 70 to 140 m²/g, in which the silica is blended in an amount of 20 to 120 parts by mass with respect to 100 parts by mass of the rubber component;
[2] the rubber composition according to the above [1], in which the modified polybutadiene rubber (A) includes a protic amino group and/or a protected amino group as an amine-based functional group;
[3] the rubber composition according to the above [1] or [2], in which the modified polybutadiene rubber (A) further includes a hydrocarbyloxysilane group;
[4] the rubber composition according to the above [3], in which the modified polybutadiene rubber (A) includes a protic amino group and/or a protected amino group and a hydrocarbyloxysilane group;
[5] the rubber composition according to the above [4], including a protic amino group and/or a protected amino group and a hydrocarbyloxysilane group at the same end of polymer;
[6] the rubber composition for a tire base rubber according to any one of the above [2] to [5], in which the protic amino group and/or the protected amino group includes at least one kind of group selected from -NH₂, -NHR^{a}, -NL¹L², and -NR^{b}L³ (provided that R^{a} and R^{b} each represent a hydrocarbon group, and L¹, L², and L³ each represent a hydrogen atom or a dissociable protective group);

[7] A process for preparing the rubber composition according to any one of the above [3] to [6], in which the modifiedpolybutadiene rubber (A) is obtained by reacting an active ends of a conjugated diene polymer with a compound having a protected amino group and a hydrocarbyloxysilane group in a molecule to modify the polymer;
[8] the process according to the above [7], in which the compound having a protected amino group and a hydrocarbyloxysilane group in the molecule includes a bifunctional silicon compound having a protected primary amino group;
[9] the process according to the above [8], in which the bifunctional silicon compound comprises at least one kind selected from a silicon compound represented by the general formula (I): 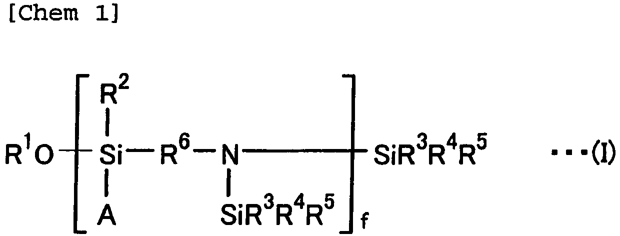 (in the general formula (I) : R¹ and R² each independently represent a hydrocarbon group having 1 to 20 carbon atoms; R³ to R⁵ each independently represent a hydrocarbon group having 1 to 20 carbon atoms; R⁶ represents an alkylene group having 1 to 12 carbon atoms; A represents a reactive group; and f represents an integer of 1 to 10), a silicon compound represented by the general formula (II) : 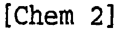 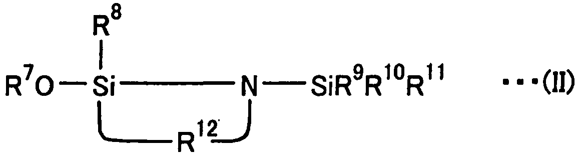 (in the general formula (II) : R⁷ to R¹¹ each independently represent a hydrocarbon group having 1 to 20 carbon atoms; and R¹² represents an alkylene group having 1 to 12 carbon atoms), and a silicon compound represented by the general formula (III): 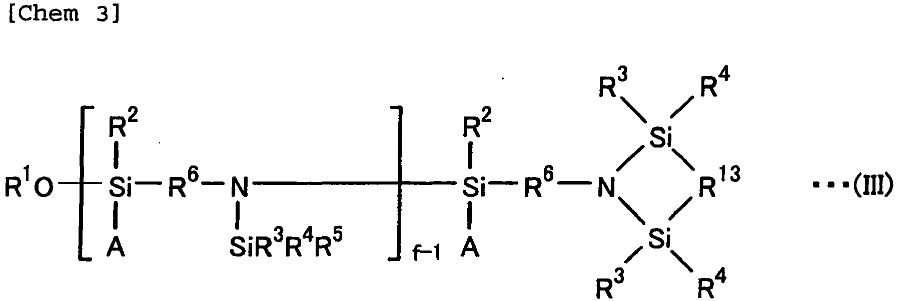 (in the general formula (III): R¹ and R² each independently represent a hydrocarbon group having 1 to 20 carbon atoms; R³ to R⁵ each independently represent a hydrocarbon group having 1 to 20 carbon atoms; R⁶ represents an alkylene group having 1 to 12 carbon atoms; R¹³ represents an alkylene group having 1 to 12 carbon atoms; A represents a reactive group; and f represents an integer of 1 to 10);
[10] the process according to the above [9], in which A in the general formula (I) represents a halogen atom or an alkoxy group having 1 to 20 carbon atoms;
[11] the process according to any one of the above [7] to [10], in which the modified polybutadiene rubber is obtained by reacting active ends of polymer with a compound having a protected amino group and a hydrocarbyloxysilane group in a molecule to modify the polymer, followed by conducting condensation reaction involving said compound in a presence of a titanium-based condensation accelerator comprising a titanium compound;
[12] the process according to the above [11], in which the titanium-based condensation accelerator comprises at least one kind selected from a titanium alkoxide, a titanium carboxylic acid salt, and a titanium acetylacetonato complex salt;
[13] the rubber composition according to any one of the above [1] to [6] or obtainable by the process of any of [7] to [12], including a silane coupling agent (C), in which the silane coupling agent is blended in an amount of 2 to 15 mass% with respect to the silica as the component (B);
[14] the rubber composition according to the above [13], in which the silane coupling agent as the component (C) is represented by the following general formula (IV):

   [Chem 4] **R¹⁴xR¹⁵yR¹⁶_{z}SiR¹⁷-S-CO-R¹⁸** (IV)

   [in the formula (IV): R¹⁴ represents R¹⁹O-, R¹⁹C(=O)O-, R¹⁹R²⁰C=NO-, R¹⁹R²N- or -(OSiR¹⁹R²⁰)ₘ(OSiR¹⁸R¹⁹R²⁰) (provided that R¹⁹ and R²⁰ each independently represent a hydrogen atom or a monovalent hydrocarbon group having 1 to 18 carbon atoms); R¹⁵ represents R¹⁴, a hydrogen atom, or a monovalent hydrocarbon group having 1 to 18 carbon atoms; R¹⁶ represents R¹⁴, R¹⁵, or an -[O(R²¹O)ₐ]_{0.5}- group (provided that R²¹ represents an alkylene group having 1 to 18 carbon atoms, and a represents an integer of 1 to 4); R¹⁷ represents a divalent hydrocarbon group having 1 to 18 carbon atoms; R¹⁸ represents a monovalent hydrocarbon group having 1 to 18 carbon atoms; and x, y, and z represent numbers satisfying relationships of x+y+2z=3, 0≤x≤3, 0≤y≤2, and 0≤z≤1];
[15] the rubber composition according to any one of the above [1] to [6], [13] [14] or obtainable by the process of any of [7] to [12], further including carbon black (D);
[16]the rubber composition according to any one of the above [1] to [6], [13] to [15] or obtainable by the process of any of [7] to [12], in which the rubber component includes 10 to 40 mass% of the modified polybutadiene rubber (A) and 60 to 90 mass% of at least one kind selected from a natural rubber, a synthetic isoprene rubber, a butadiene rubber, a styrene-butadiene rubber, an ethylene-α-olefin copolymer rubber, an ethylene-α-olefin-diene copolymer rubber, a chloroprene rubber, a halogenated butyl rubber, and a copolymer of styrene having a halogenated methyl group and isobutylene; and
[17] a pneumatic tire, in which the rubber composition according to any one of the above [1] to [6], [13] to [16] or obtainable by the process of any of [7] to [12] is used as a base rubber.

### Effects of the Invention

The rubber composition of the present invention can provide a rubber composition including a modified polybutadiene rubber and silica having a specific particle diameter, the rubber composition being capable of providing a pneumatic tire which is excellent in fracture property and can have greatly reduced rolling resistance, and a pneumatic tire having the above-mentioned characteristics made using the rubber composition as a base rubber.

### Brief Description of the Drawings

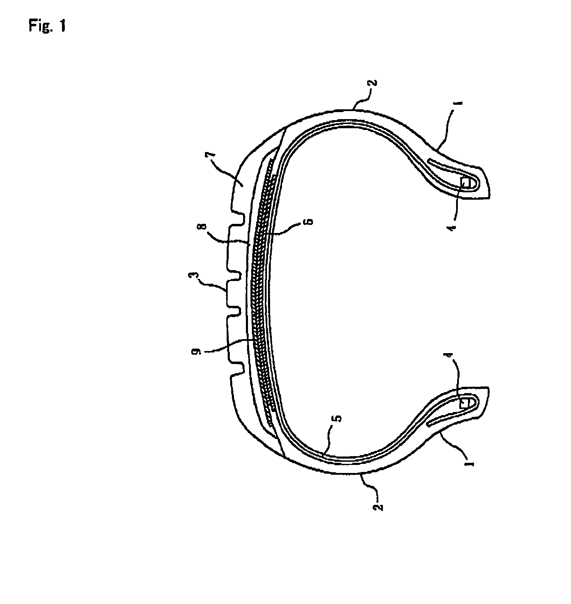

FIG. 1 is a cross-sectional view illustrating one embodiment of a pneumatic tire of the present invention.

### Explanation of the Codes

- 1: bead part
- 2: sidewall part
- 3: tread part
- 4: bead core
- 5: radial carcass
- 6: belt
- 7: cap rubber
- 8: base rubber
- 9: tread under-cushion rubber

### Best Mode for carrying out the Invention

First, a modified polybutadiene rubber of the present invention is described.

### [Modified polybutadiene rubber]

The modified polybutadiene rubber of the present invention (which may hereinafter be referred to as a modified BR) must be modified with an amine-based functional group.
In the modified BR of the present invention, a position in a polymer, into which the amine-based functional group is introduced, is not particularly limited and may be an end of polymer or may be a side chain of a polymer chain. The position is preferably an end of polymer from the viewpoints of ease of introduction of the amine-based functional group and improvement in the property of exhibiting small heat buildup through prevention of energy loss from an end of polymer.
Examples of the amine-based functional group include a protic amino group and/or a protected amino group. Further, in the modified BR, it is preferred to include a hydrocarbyloxysilane group together with the protic amino group and/or the protected amino group in a polymer.
Those functional groups are preferably introduced into the end of polymer for the above-mentioned reasons, and are particularly preferably introduced into the same end of polymer.
The protic amino group, the protected amino group, the hydrocarbyloxysilane group, a compound (which may hereinafter be referred to as a modifier) having those functional groups used for modification of a base BR (which is hereinafter referred to as a BR or an unmodified BR), and the like are described in detail below.
As for a production method for the modified BR of the present invention, a method of producing a modified BR by providing a BR having an active end, and then allowing a modifier to react with the active end may be adopted.

### (Production of BR)

In the present invention, the BR having an active end is obtained by polymerization of 1, 4-butadiene alone. No particular limitation is imposed on the production method, and any of a solution polymerization method, a gas phase polymerization method, and a bulk polymerization method may be employed. Of those, a solution polymerization method is particularly preferred. Further, the polymerization mode may be a batch mode or a continuous mode.
In the BR having an active end, it is preferred that at least 10% of a polymer chain have living property. A polymerization reaction having such living property is, for example, a reaction involving subjecting 1,4-butadiene to anionic polymerization in an organic solvent using an organic alkali metal compound as an initiator.

The organic alkali metal compound to be used as the initiator for anionic polymerization as described above is preferably an organic lithium compound. No particular limitation is imposed on the organic lithium compound, and a hydrocarbyllithium and a lithium amide compound are preferably used. The use of the former hydrocarbyllithium provides a BR polymer having a hydrocarbyl group at a polymerization-initiating end and having a polymerization active portion at the other end. Further, the use of the latter lithium amide compound provides a BR having a nitrogen-containing group at a polymerization-initiating end and having a polymerization active portion at the other end.

The hydrocarbyllithium preferably has a hydrocarbyl group having 2 to 20carbonatoms, and examples thereof include ethyllithium, n-propyllithium, isopropyllithium, n-butyllithium, sec-butyllithium, tert-octyllithium, n-decyllithium, phenyllithium, 2-naphthyllithium, 2-butylphenyllithium, 4-phenylbutyllithium, cyclohexyllithium, cyclopentyllithium, and a reaction product of diisopropenylbenzene and butyllithium. Of those, n-butyllithium is particularly suitable.

Meanwhile, examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenethylamide. Of those, cyclic lithium amides such as lithium hexamethyleneimide, lithium pyrrolidide, lithium piperidide, lithium heptamethyleneimide, and lithium dodecamethyleneimide are preferred from the viewpoints of an interaction effect with carbon black and a polymerization-initiating ability, and lithium hexamethyleneimide and lithium pyrrolidide are particularly suitable.
In general, those lithium amide compounds for use in polymerization may be prepared in advance from a secondary amine and a lithium compound. Alternatively, the amide compounds may also be prepared in a polymerization system (in-Situ). Further, the use amount of the polymerization initiator is preferably selected in the range of 0.2 to 20 mmol per 100 g of monomers.

No particular limitation is imposed on a method of producing a BR by anion polymerization using the organic lithium compound as the polymerization initiator, and a conventionally known method may be employed.
To be specific, a objective BR having an active end is obtained by anion polymerization of 1,4-butadiene using the lithium compound as the polymerization initiator in the presence of a randomizer to be used as desired in a reaction-inert organic solvent, for example, in a hydrocarbon-based solvent such as an aliphatic, alicyclic, or aromatic hydrocarbon compound.

The hydrocarbon-based solvent preferably has 3 to 8 carbon atoms, and examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. Those may be used alone or as a mixture of two or more kinds thereof.
Further, the concentration of monomers in the solvent is preferably 5 to 50 mass% or more preferably 10 to 30 mass%.

The randomizer which is used by request is a compound which exhibits the functions of controlling the microstructure of the BR such as a 1,2-bond amount in the butadiene unit or distribution of the monomer.
No particular limitation is imposed on the randomizer, and any known compound, which has been conventionally used as the randomizer, may be appropriately selected and used. Specific examples of the randomizer include ethers and tertiary amines such as dimethoxybenzene, tetrahydrofuran, dimethoxyethane, diethylene glycol dibutyl ether, diethylene glycol dimethyl ether, oligomeric oxolanyl propanes [such as, in particular, oligomeric oxolanyl propanes including 2,2-bis(2-tetrahydrofuryl)-propane], triethylamine, pyridine, N-methylmorpholine, N,N,N',N'-tetramethylethylenediamine, and 1,2-dipiperidinoethane. Further, potassium salts such as potassium tert-amylate, potassium tert-butoxide and sodium salts such as sodium tert-amylate may also be used.

Those randomizers may be used alone or in combination of two or more kinds thereof. Further, the use amount is selected in the range of preferably 0.01 to 1000 molar equivalents per mol of the lithium compound.
The temperature in the polymerization reaction is selected in the range of preferably 0 to 150°C or more preferably 20 to 130°C. Although the polymerization reaction may be carried out under a generated pressure, it is generally desirable to carry out an operation under a pressure enough to keep monomers substantially in a liquid phase. That is, although the pressure varies depending on individual substances to be polymerized, a polymerization medium to be used, and a polymerization temperature, a higher pressure may be used as desired. Such pressure is attained by an appropriate method such as pressurization of a reactor with a gas inert to the polymerization reaction.

### (Modification of BR)

In the present invention, an amine-based functional group such as a protic amino group and/or a protected amino group or preferably a protic amino group and/or a protected amino group and a hydrocarbyloxysilane group are introduced into the end of polymer by reacting a given modifier with an active end of the thus obtained BR having an active end. It is more preferred to introduce the protic amino group and/or the protected amino group and the hydrocarbyloxysilane group into the same end of polymer.
Examples of the protic amino group and/or the protected amino group include at least one kind of group selected from -NH₂, -NHR^{a}, -NL¹L², and -NR^{b}L³ (provided that R^{a} and R^{b} each represent a hydrocarbon group, and L¹, L², and L³ each represent a hydrogen atom or a dissociable protective group).
Examples of the hydrocarbon group represented by each of R^{a} and R^{b} include a variety of alkyl groups, alkenyl groups, aryl groups, and aralkyl groups. L¹, L², and L³ are not particularly limited as long as they each represent an easily dissociable protective group, and examples thereof include groups as described below.

### <Modifying agent>

In the present invention, the modified BR preferably has a protic amino group and/or a protected amino group and a hydrocarbyloxysilane group at the same end of polymer. Thus, a bifunctional silicon compound having a protected primary amino group in the same molecule is preferably used as the modifier.
Examples of the bifunctional silicon compound having a protected primary amino group in the same molecule include silicon compounds represented by the general formula (I), the general formula (II), and the general formula (III).

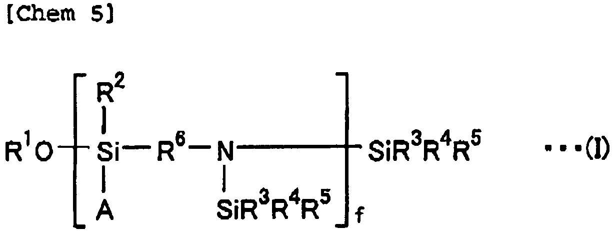

In the general formula (I), R¹ and R² each independently represent a hydrocarbon group having 1 to 20 carbon atoms; R³ to R⁵ each independently represent a hydrocarbon group having 1 to 20 carbon atoms; R⁶ represents an alkylene group having 1 to 12 carbon atoms; A represents a reactive group or preferably a halogen atom or an alkoxy group having 1 to 20 carbon atoms; and f represents an integer of 1 to 10.

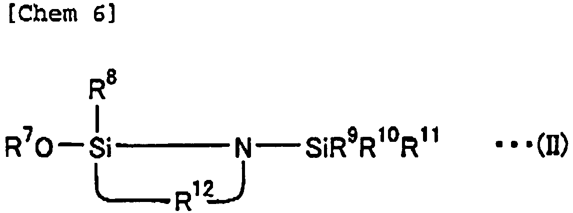

In the general formula (II), R⁷ to R¹¹ each independently represent a hydrocarbon group having 1 to 20 carbon atoms; and R¹² represents an alkylene group having 1 to 12 carbon atoms.

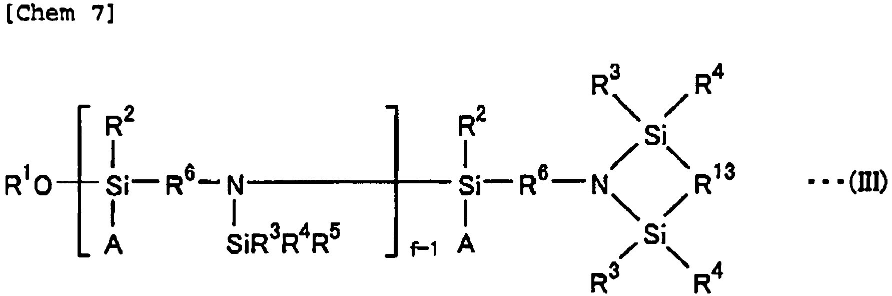

In the general formula (III), R¹ and R² each independently represent a hydrocarbon group having 1 to 20 carbon atoms; R³ to R⁵ each independently represent a hydrocarbon group having 1 to 20 carbon atoms; R⁶ represents an alkylene group having 1 to 12 carbon atoms; R¹³ represents an alkylene group having 1 to 12 carbon atoms; A represents a reactive group; and f represents an integer of 1 to 10.

In the above general formula (I) to (III), preferred examples of the alkylene group having 1 to 12 carbon atoms represented by R⁶ or R¹² include a methylene group, an ethylene group, and a propylene group. Examples of the hydrocarbon group having 1 to 20 carbon atoms include alkyl groups such as a methyl group, an ethyl group, and a propyl group; aryl groups such as a phenyl group, a toluyl group, a naphthyl group; and aralkyl groups such as a benzyl group.
Further, two of the hydrocarbon groups represented by R³, R⁴, and R⁵ in the general formula (I) may be bonded to each other to form a four- to seven-membered ring together with a silicon atom to which each of the groups is bonded. Similarly, two of the hydrocarbon groups represented by R⁹, R¹⁰, and R¹¹ in the formula (II) may be bonded to each other to form a four- to seven-membered ring together with a silicon atom to which each of the groups is bonded. R¹³ represents an alkylene group having 1 to 12 carbon atoms.

Examples of the bifunctional silicon compound having a protected primary amino group in the same molecule include N,N-bis(trimethylsilyl)aminopropylmethyldimethoxysilane, N,N-bis(trimethylsilyl)aminopropylmethyldiethoxysilane, N,N-bis(trimethylsilyl)aminoethylmethyldimethoxysilane, N,N-bis(trimethylsilyl)aminoethylmethyldiethoxysilane, and 1-trimethylsilyl-2,2-diethoxymethyl-1-aza-2-silacyclopentane.
Further, a compound represented by general formula (I) in which A represents a halogen atom is, for example, N,N-bis(trimethylsilyl)aminopropylmethylmethoxychlorosilane, N,N-bis(trimethylsilyl)aminopropylmethylethoxychlorosilane, N,N-bis(trimethylsilyl)aminoethylmethylmethoxychlorosilane, or N,N-bis(trimethylsilyl)aminoethylmethylethoxychlorosilane.
Among these compounds, N,N-bis(trimethylsilyl)aminopropylmethyldimethoxysilane, N,N-bis(trimethylsilyl)aminopropylmethyldiethoxysilane, and 1-trimethylsilyl-2,2-diethoxymethyl-1-aza-2-silacyclopentane are preferred.
These modifiers may be used alone or in combination of two or more kinds thereof. Further, the modifier may be a partial condensation product.
Here, the partial condensation product refers to a product in which SiORs in the modifier are partially (not wholly) condensed to form SiOSi bonds.
In the polymer used in the above-mentioned modification reaction, it is preferred that at least 10% of a polymer chain has the living property.

In the modification reaction using the modifier as described above, the use amount of the modifier is preferably 0.5 to 200 mmol/kg•BR. The content of the modifier is more preferably 1 to 100 mmol/kg•BR or particularly preferably 2 to 50 mmol/kg•BR. Here, the BR means the mass of only a polymer excluding any additive such as an antioxidant to be added during production or after production. When the use amount of the modifier falls within the above-mentioned range, the dispersibility of the filler is excellent, and the fracture property, abrasion property, and small heat buildup after vulcanization are improved.
The process for adding the modifier is not particularly limited. The modifier may be added at once in the entire amount, separately in portions or continuously in portions. It is preferable that the modifier is added at once in the entire amount.
The modifier may be bonded to any of the chain end of the initiation of the polymerization, the chain end of the termination of the polymerization, the main chain of the polymer and side chains of the polymer. It is preferable that the modifier is bonded to the chain end of the initiation of the polymerization or the chain end of the termination of the polymerization since the energy loss at the chain end of the polymer can be suppressed, and the property of exhibiting small heat buildup can be improved.

### <Condensation accelerator>

In the present invention, a condensation accelerator is preferably used in order to accelerate a condensation reaction in which the alkoxysilane compound having a protected primary amino group to be used as the modifying agent as described above is involved.
A compound containing a tertiary amino group or an organic compound containing one or more kinds of elements belonging to any one of the Groups 3, 4, 5, 12, 13, 14, and 15 of the Periodic Table (Long-Period type) may be used as such condensation accelerator. In addition, the condensation accelerator is preferably an alkoxide, a carboxylic acid salt, or an acetylacetonato complex salt containing at least one or more kinds of metals selected from the group consisting of titanium (Ti), zirconium (Zr), bismuth (Bi), aluminum (Al), and tin (Sn).
The condensation accelerator to be used in this case may be added before the modification reaction, and may be preferably added into a modification reaction system during the modification reaction and/or after the completion of the modification reaction. When the condensation accelerator is added before the modification reaction, the condensation accelerator directly reacts with an active end, with the result that no hydrocarbyloxy group having a protected primary amino group may be introduced into the active end.
The time at which the condensation accelerator is added is generally 5 minutes to 5 hours after the start of the modification reaction or preferably 15 minutes to 1 hour after the start of the modification reaction.

Specific examples of the condensation accelerator include titanium-containing compounds such as tetramethoxytitanium, tetraethoxytitanium, tetra-n-propoxytitanium, tetraisopropoxytitanium, tetra-n-butoxytitanium, a tetra-n-butoxytitanium oligomer, tetra-sec-butoxytitanium, tetra-tert-butoxytitanium, tetra(2-ethylhexyl)titanium, bis(octanediolato)bis(2-ethylhexyl)titanium, tetra(octanediolato)titanium, titanium lactate, titanium dipropoxybis(triethanolaminate), titanium dibutoxybis(triethanolaminate), titanium tributoxystearate, titanium tripropoxystearate, titanium ethylhexyldiolate, titanium tripropoxyacetylacetonate, titanium dipropoxybis(acetylacetonate), titanium tripropoxyethylacetoacetate, titanium propoxyacetylacetonatobis(ethylacetoacetate), titanium tributoxyacetylacetonate, titanium dibutoxybis(acetylacetonate), titanium tributoxyethylacetoacetate, titanium butoxyacetylacetonatobis(ethylacetoacetate), titanium tetrakis(acetylacetonate), titanium diacetylacetonatobis (ethylacetoacetate), bis(2-ethylhexanoato)titanium oxide, bis(laurato)titanium oxide, bis(naphthenato)titanium oxide, bis(stearato)titanium oxide, bis(oleato)titanium oxide, bis(linolato)titanium oxide, tetrakis(2-ethylhexanoato)titanium, tetrakis(laurato)titanium, tetrakis(naphthenato)titanium, tetrakis(stearato)titanium, tetrakis(oleato)titanium, and tetrakis(linolato)titanium.

Further examples of the condensation accelerator include tris(2-ethylhexanoato)bismuth, tris(laurato)bismuth, tris(naphthenato)bismuth, tris(stearato)bismuth, tris(oleato)bismuth, tris(linolato)bismuth, tetraethoxyzirconium, tetra-n-propoxyzirconium, tetraisopropoxyzirconium, tetra-n-butoxyzirconium, tetra-sec-butoxyzirconium, tetra-tert-butoxyzirconium, tetra(2-ethylhexyl)zirconium, zirconium tributoxystearate, zirconium tributoxyacetylacetonate, zirconium dibutoxybis(acetylacetonate), zirconium tributoxyethylacetoacetate, zirconium butoxyacetylacetonatobis(ethylacetoacetate), zirconium tetrakis(acetylacetonate), zirconium diacetylacetonatobis(ethylacetoacetate), bis (2-ethylhexanoato) zirconium oxide, bis (laurato) zirconium oxide, bis(naphthenato)zirconium oxide, bis(stearato)zirconium oxide, bis(oleato)zirconium oxide, bis(linolato)zirconium oxide, tetrakis(2-ethylhexanoato)zirconium, tetrakis(laurato)zirconium, tetrakis(naphthenato)zirconium, tetrakis(stearato)zirconium, tetrakis(oleato)zirconium, and tetrakis(linolato)zirconium.

Still further examples of the condensation accelerator include triethoxyaluminum, tri-n-propoxyaluminum, triisopropoxyaluminum, tri-n-butoxyaluminum, tri-sec-butoxyaluminum, tri-tert-butoxyaluminum, tri(2-ethylhexyl)aluminum, aluminum dibutoxystearate, aluminum dibutoxyacetylacetonate, aluminum butoxybis(acetylacetonate), aluminum dibutoxyethylacetoacetate, aluminum tris(acetylacetonate), aluminum tris(ethylacetoacetate), tris(2-ethylhexanoato)aluminum, tris(laurato)aluminum, tris(naphthenato)aluminum, tris(stearato)aluminum, tris(oleato)aluminum, and tris(linolato)aluminum.

Among the above-mentioned condensation accelerators, titanium-based condensation-accelerating agents are preferred, and a titanium metal alkoxide, a titanium metal carboxylic acid salt, or a titanium metal acetylacetonato complex salt is particularly preferred. As for the use amount of the condensation accelerator, it is preferred that the ratio by mole of the compound be 0.1 to 10 or particularly preferably 0.5 to 5 at a molar ratio with respect to the total amount of a hydrocarbyloxy group present in a reaction system. When the use amount of condensation accelerator falls within the above-mentioned range, a condensation reaction proceeds efficiently.

The condensation reaction in the present invention proceeds in the presence of the above-mentioned condensation accelerator and steam or water. When steam is present, for example, a solvent removal treatment based on steam stripping is performed, and the condensation reaction proceeds during the steam stripping.
Further, the condensation reaction may be performed in an aqueous solution, and the temperature during the condensation reaction is preferably 85 to 180°C, more preferably 100 to 170°C, or particularly preferably 110 to 150°C.
When the temperature of the condensation reaction is kept within the above range, the condensation reaction proceeds efficiently to complete the reaction, and decrease in the quality with passage of the time due to aging reactions of the polymer in the modified conjugate diene-based polymer thus obtained can be suppressed.

It should be noted that the condensation reaction time is generally 5 minutes to 10 hours or preferably 15 minutes to 5 hours. When the condensation reaction time falls within the above-mentioned range, the condensation reaction can be completed smoothly.
It should be noted that the pressure in the reaction system during the condensation reaction is generally 0.01 to 20 MPa or preferably 0.05 to 10 MPa.
No particular limitation is imposed on a mode with which the condensation reaction is performed in an aqueous solution, and the reaction may be carried out using a batch-type reactor, or may be carried out in a continuous manner using an apparatus such as a multi-step continuous reactor. Further, the condensation reaction and solvent removal may be performed simultaneously.
The primary amino group derived from the modifier in the modified conjugated diene-based polymer of the present invention is generated by carrying out a deprotection treatment as described above. Suitable specific examples of the deprotection treatment excluding the above-mentioned solvent removal treatment using steam such as steam stripping are described in detail below.
That is, a protective group on the primary amino group is hydrolyzed to form a free primary amino group. The resultant may be subjected to a solvent removal treatment to afford a modified conjugated diene-based polymer having a primary amino group. It should be noted that in any step from a step including the condensation treatment to a step of removing a solvent to produce a dried polymer, the deprotection treatment of the protected primary amino group derived from the modifying agent may be performed as appropriate.

The modified BR obtained in the present invention has a Mooney viscosity (ML₁₊₄, 100°C) of preferably 10 to 150 or more preferably 50 to 90. When the value of the Mooney viscosity falls within the above-mentioned range, a rubber composition excellent in kneading workability and mechanical characteristics after vulcanization can be obtained.
The modified BR in the present invention has a protic amino group and/or a protected amino group or preferably those amine-based functional groups and a hydrocarbyloxysilane group in the polymer. A dissociable group of each of the protic amino group and the protected amino group has a satisfactory interaction with carbon black or silica, whereas the hydrocarbyloxysilane group has an excellent interaction particularly with silica. The use of a rubber composition including the modified BR in a base rubber can provide a pneumatic tire having excellent fracture property in combination with small heat buildup.

Next, the rubber composition of the present invention is described.

### [Rubber composition]

The rubber composition of the present invention is a rubber composition including the above-mentioned modified BR of the present invention. Such rubber composition must include: (A) a rubber component including the above-mentioned modified BR of the present invention; and (B) silica having a cetyltrimethylammonium bromide (CTAB) adsorption specific surface area of 50 to 120 (m²/g) and having a nitrogen adsorption specific surface area (N₂SA), which is determined by a BET method, of 70 to 140 m²/g, in which the silica is blended in an amount of 20 to 120 parts by mass with respect to 100 parts by mass of the rubber component.

### (Rubber component (A))

The rubber composition of the present invention preferably includes at least 10 mass% of the modified BR in a rubber component. It is suitable that the content of the modified BR in the rubber component be preferably 40 mass% or more or particularly preferably 50 mass% or more. When the content of the modified BR in the rubber component is 10 mass% or more, a rubber composition having desired physical properties can be obtained.
The modified BR may be used alone or in combination of two or more kinds thereof. Further, there are exemplified, as other rubber components to be used in combination with the modified BR, a natural rubber, a synthetic isoprene rubber, a butadiene rubber, a styrene-butadiene rubber, an ethylene-α-olefin copolymer rubber, an ethylene-α-olefin-diene copolymer rubber, an acrylonitrile-butadiene copolymer rubber, a chloroprene rubber, a halogenated butyl rubber, and a mixture thereof. Further, the rubber components may have a partial branched structure as a result of the use of a polyfunctional modifier, e.g., a modifier such as tin tetrachloride or silicon tetrachloride. A combination with a natural rubber, a polyisoprene rubber, or an unmodified polybutadiene rubber is preferred from the viewpoint of application to a base rubber.

### (Silica (B))

In the rubber composition of the present invention, silica serving as a reinforcing filler as a component (B) is blended.
The silica must have a cetyltrimethylammonium bromide (CTAB) adsorption specific surface area of 50 to 120 (m²/g) and have a nitrogen adsorption specific surface area (N₂SA), which is determined by a BET method, of 70 to 140 (m²/g). The CTAB is preferably in the range of 80 to 130 (m²/g) and the N₂SA, which is determined by BET, is preferably in the range of 80 to 120 (m²/g) . Silica having CATB and N₂SA in the above-mentioned range is combined with the modified BR forming the rubber component (A) to exhibit a large improvement in dispersibility into the rubber component, which allows for the maintenance of fracture property and large improvement in hysteresis loss. An example of such silica includes "Zeosil 1115 MP" manufactured by Rhodia Co.,Ltd.
The silica may be used alone or in combination of two or more kinds thereof. The blending amount of the silica with respect to 100 parts by mass of the rubber component must be 20 to 120 parts by mass or preferably 20 to 100 parts by mass. When the blending amount of the silica falls within the above-mentioned range, the deterioration in kneading workability of the composition can be suppressed, and excellent fracture property and low hysteresis loss characteristic can be obtained.

### (Carbon black)

In the rubber composition according to the present invention, carbon black may be further used in an amount of 5 parts by mass or more with respect to 100 parts by mass of the above-mentioned rubber component so that the blending ratio of silica and carbon black is 70:30 to 92:8 at a mass ratio, to thereby ensure fracture property and provide excellent low hysteresis loss property. It is preferred to use, as the carbon black, at least one kind selected from GPF grade carbon black, FEF grade carbon black, HAF grade carbon black, ISAF grade carbon black, and SAF grade carbon black. SAF grade carbon black is preferably used to ensure reinforcing property, and GPF grade carbon black, FEF grade carbon black, and HAF grade carbon black are preferably used to ensure low hysteresis loss.

### (Silane coupling agent)

Silica is used as a reinforcing filler in the rubber composition Of the present invention. Accordingly, a silane coupling agent may be blended for the purpose of further improving the reinforcing property and the small heat buildup. A preferred blending amount of the silane coupling agent, which varies depending on the kind of the silane coupling agent, is preferably selected in the range of 2 to 20 mass% with respect to the silica. When the amount is less than 2 mass%, the effect of the coupling agent is hard to be exhibited sufficiently. On the other hand, when the amount exceeds 20 mass%, the rubber component may gelate. From the viewpoints of the effect of couplingagent, the prevention of gelation, and the like, the preferred blending amount of the silane coupling agent is in the range of 5 to 15 mass%.

Used as a preferred silane coupling agent being excellent in workability during kneading processing of the rubber composition and improving the dispersion of silica into the rubber component is a silane coupling agent including a protected mercaptosilane represented by the following general formula (IV):

[Chem 8] **R¹⁴ₓR¹⁵_{y}R¹⁶_{Z}SiR¹⁷-S-CO-R¹⁸** (IV)

In the general formula (IV), R¹⁴ represents R¹⁹O-, R¹⁹C(=O)O-, R¹⁹R²⁰C=NO-, R¹⁹R²⁰N- or -(OSiR¹⁹R²⁰)ₘ(OSiR¹⁸R¹⁹R²⁰) (provided that R¹⁹ and R²⁰ each independently represent a hydrogen atom or a monovalent hydrocarbon group having 1 to 18 carbon atoms) ; R¹⁵ represents R¹⁴, a hydrogen atom, or a monovalent hydrocarbon group having 1 to 18 carbon atoms; R¹⁶represents R¹⁴, R¹⁵, or an -[O(_{R}²¹O)ₐ]_{0.5}- group (provided that: R²¹ represents an alkylene group having 1 to 18 carbon atoms; and a represents an integer of 1 to 4); R¹⁷ represents a divalent hydrocarbon group having 1 to 18 carbon atoms; R¹⁸ represents a monovalent hydrocarbon group having 1 to 18 carbon atoms; and x, y and z represent numbers satisfying relationships of x+y+2z=3, 0≤x≤3, 0≤y≤2, and 0≤z≤1.
In the general formula (IV), examples of the monovalent hydrocarbon group having 1 to 18 carbon atoms include an alkyl group having 1 to 18 carbon atoms, an alkenyl group having 2 to 18 carbon atoms, an aryl group having 6 to 18 carbon atoms, and an aralkyl group having 7 to 18 carbon atoms. Here, the above-mentioned alkyl group and alkenyl group may be linear, branched, or cyclic, and the above-mentioned aryl group and aralkyl group may have a substituent such as a lower alkyl group on the aromatic ring.

Specific examples of the monovalent hydrocarbon group having 1 to 18 carbon atoms include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.
In the general formula (IV), the alkylene group having 1 to 18 carbon atoms represented by R²¹ may be a linear alkylene group, a branched alkylene group, or a cyclic alkylene group. Of those, a linear alkylene group is particularly suitable. Examples of the linear alkylene group include a methylene group, an ethylene group, a trimethylene group, a tetramethylene group, a pentamethylene group, a hexamethylene group, an octamethylene group, a decamethylene group, and a dodecamethylene group.
Further, examples of the divalent hydrocarbon group having 1 to 18 carbon atoms represented by R¹⁷ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The alkylene group and the alkenylene group may be linear or branched, and the cycloalkylene group, the cycloalkylalkylene group, the arylene group, and the aralkylene group may have a substituent such as a lower alkyl group on the ring.
A preferred example of the divalent hydrocarbon group represented by R¹⁷ includes an alkylene group having 1 to 6 carbon atoms, and particularly preferred examples thereof include linear alkylene groups such as a methylene group, an ethylene group, a trimethylene group, a tetramethylene group, a pentamethylene group, and a hexamethylene group.
Examples of the silane coupling agent represented by the general formula (IV) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane.

In the rubber composition of the present invention, the use of such silane coupling agent reduces the viscosityof anunvulcanized rubber to lengthen the time to scorch generation, which allows for kneading for a long period of time. Thus, the workability during kneading processing of the rubber composition is excellent, the dispersion of silica into a rubber component is improved, and the reactivity of silica with a polymer is improved, leading to a reduction in hysteresis loss. The improvements can be utilized to increase the blending amount of a reinforcing filler. As a result, a pneumatic tire having satisfactory abrasion resistance can be obtained.
In the present invention, the silane coupling agents may be used alone or in combination of two or more kinds thereof. Further, the blending amount of the silane coupling agent is selected in the range of generally 2 to 20 mass% with respect to the silica as the component (B). When the blending amount of the silane coupling agent falls within the above-mentioned range, the effect of the present invention is exhibited sufficiently. The blending amount is preferably in the range of 5 to 15 mass%.
In addition, in order to couple the silane coupling agent and a polymer, it is preferred to blend a proton donor typified by diphenylguanidine (DPG) serving as a deprotection agent in a final kneading step. The use amount is preferably 0.1 to 5.0 parts by mass or more preferably 0.2 to 3.0 parts by mass with respect to 100 parts by mass of the rubber component.

In addition, conventionally used silane coupling agents may also be applied.
Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. Of those, bis(3-triethoxysilylpropyl) polysulfide and 3-trimethoxysilylpropylbenzothiazyl tetrasulfide are suitable from the viewpoints of an effect of improving reinforcing property.
These silane coupling agents maybe used alone or in combination of two or more kinds thereof.

### (Preparation of rubber composition)

So long as the object of the present invention is not impaired, the rubber composition of the present invention may contain, as desired, a variety of chemicals to be generally used in the rubber industry, such as a vulcanizing agent, a vulcanization accelerator, a process oil, an antioxidant, a antiscorching agent, zinc oxide, and stearic acid.
An example of the above-mentioned vulcanizing agent includes sulfur. The use amount is preferably 0.1 to 10.0 parts by mass or more preferably 1.0 to 5.0 parts by mass in terms of sulfur with respect to 100 parts by mass of the rubber component (A). A use amount of less than 0.1 part by mass may deteriorate the fracture strength, abrasion resistance, and small heat buildup of avulcanized rubber. On the other hand, a use amount of more than 10.0 parts by mass causes the loss of rubber elasticity.

Examples of the vulcanization accelerator which may be used in the present invention include, but are not particularly limited to, thiazole-based agents such as 2-mercaptobenzothiazole (M), dibenzothiazyl disulfide (DM), and N-cyclohexyl-2-benzothiazylsulfenamide (CZ), or guanidine-based vulcanization-accelerating agents such as diphenylguanidine (DPG). The use amount is preferably 0.1 to 5.0 parts by mass ormore preferably 0.2 to 3.0 parts by mass with respect to 100 parts by mass of the rubber component (A).

Further, examples of the process oil which may be used in the rubber composition of the present invention include a paraffin-based oil, a naphthene-based oil, and an aromatic oil. The aromatic oil is usedforapplications in which the tensile strength and the abrasion resistance are regarded as important, and the naphthene-based oil or the paraffin-based oil is used for applications in which the hysteresis loss and the low-temperature characteristic are regarded as important. The use amount is preferably 0 to 100 parts by mass with respect to 100 parts by mass of the rubber component (A). A use amount of more than 100 parts by mass has a tendency of deteriorating the tensile strength and the small heat buildup of a vulcanized rubber.

The rubber composition of the present invention is obtained by kneading using a kneading machine such as a roll or an internal mixer. The rubber composition is subjected to molding processing followed by vulcanization. The resultant is suitably used as a tread rubber having a cap/base structure or particularly a base rubber.

### [Pneumatic tire]

Next, an embodiment of the pneumatic tire of the present invention is described with reference of a drawing. FIG. 1 is a cross-sectional view illustrating one embodiment of the pneumatic tire of the present invention. The tire illustrated in FIG. 1 has a left and right pair of bead parts 1, a pair of sidewall parts 2, and a tread part 3 connected to both of the sidewall parts 2, and includes a radial carcass 5 extending in a toroid shape between bead cores 4 embedded in the pair of bead parts 1 and reinforcing each of the parts 1, 2, and 3, and a belt 6 being placed at the outer side in the tire radial direction of the carcass 5 and being formed of at least two belt layers. The treadpart 3 in the illustrated example has a cap rubber 7 positioned at the outermost side in the tire radial direction, a base rubber 8 positioned at the inner side in the radial direction, and a tread under-cushion rubber 9 positioned at the inner side in the radial direction of the base rubber 8. The tire of the present invention may include a single layer formed of the cap rubber 7 and the base rubber 8, and the tread under-cushion rubber 9 may be omitted.

The pneumatic tire of the present invention is produced by a general method using the rubber composition of the present invention. That is, as necessary, the rubber composition of the present invention into which a variety of chemicals have been incorporated as described above is processed into a base rubber at an unvulcanization stage, and is then applied and molded on a tire molding machine by an ordinary method to form a green tire. The green tire is heated and pressurized in a vulcanizer to afford a tire.
In the thus obtained pneumatic tire of the present invention, the use of, as the above-mentioned base rubber 8, the rubber composition obtained by blending silica having a large particle diameter and the modified BR into the above-mentioned rubber component can greatly reduce rolling resistance and improve the reinforcing property between the silica having a large particle diameter and the polymer, to thereby provide the base rubber 8 being excellent in fracture property and having high elasticity. Thus, dry performance (steering stability) is improved. Besides, the rubber composition has satisfactory processability and hence provides excellent productivity.

### Examples

Next, the present invention is described in more detail by way of examples. However, the present invention is not limited in any way by these examples.
It should be noted that the physical properties of a polymer were measured in accordance with the following methods.
It should be noted that various characteristics were measured in accordance with the following methods.

### <<Physical properties of unmodified or modified BR>>

### <Analysis method for microstructure>

A vinyl bond content (%) was measured by an infrared method (the Morello's method).

### <Measurement of number average molecular weight (Mn), weight average molecular weight (Mw), and molecular weight distribution (Mw/Mn) >

The measurement was performed by GPC [manufactured by Tosoh Corporation, HLC-8020] with a refractometer as a detector, and the results were represented in terms of polystyrene using monodisperse polystyrene as a standard. It should be noted that a column was GMHXL [manufactured by Tosoh Corporation] and an eluent was tetrahydrofuran.

### <Measurement of primary amino group content (mmol/kg)>

First, a polymer was dissolved in toluene and then precipitated in a large amount of methanol to separate an amino group-containing compound unbound to the polymer from a rubber. After that, the resultant polymer was dried. A total amino group content was quantified in accordance with "Testing method for total amine values" described in JIS K7237 using the polymer subjected to the above-mentioned treatment as a sample. Subsequently, secondary amino group and tertiary amino group contents were quantified in accordance with "Acetylacetone blocked method" using the polymer subjected to the above-mentioned treatment as a sample. o-Nitrotoluene was used as a solvent for dissolving the sample. Acetyl acetone was added thereto and potential difference titration was performed using a perchloric-acetic acid solution. A primary amino group content (mmol) was determined by subtracting the secondary amino group and tertiary amino group contents from the total amino group content, and divided by the mass of the polymer used for analysis, to thereby determine a polymer-bound primary amino group content (mmol/kg).

### <<Physical properties of vulcanized rubber>>

### (1) Fracture property

Avulcanized rubber sheet was measured for its tensile strength at break (TSb) at room temperature (25°C) in accordance with JIS K 6251-2004. The results were represented with an index by defining the numerical value of Comparative Example 1 as 100, to thereby determine fracture property. A larger index value means that the vulcanized rubber sheet has more satisfactory fracture property.

### «Tire performance»

### (1) Rolling resistance

Tire size: 22.5/45R17

Measured by rotating a tire at a speed of 80 km/h from a rotating drum

### Load: 4.41 kN

Measurement values were represented with an index by defining the measurement value of Comparative Example 1 as 100. A smaller numerical value means that rolling resistance is lower.

### (2) Dry performance

### Tire size: 22.5/45R17

An evaluation was performed based on a feeling of a test driver. The results were represented with an index by defining the numerical value of Comparative Example 1 as 100. A larger numerical value means that dry performance is more excellent.

### Production Example 1: Primary amine modified butadiene rubber

### <Synthesis of modifying agent>

### Synthesis Example 1: Synthesis of N,N-bis(trimethylsilyl)aminopropylmethyldiethoxysilane

Under a nitrogen atmosphere, 36 g of 3-aminopropylmethyldiethoxysilane (manufactured by Gelest, Inc.) for forming an aminosilane moiety were added to 400 ml of a dichloromethane solvent in a glass flask equipped with a stirrer. Subsequently, 48 ml of trimethylsilane chloride (manufactured by Sigma-Aldrich, Inc.) and 53 ml of triethylamine for forming a protective moiety were added to the solution, and the mixture was stirred at room temperature for 17 hours. After that, the reaction solution was evaporated with an evaporator in order to remove a solvent, to thereby afford a reaction mixture. The resultant reaction mixture was distilled under reducedpressure under a 5-mm/Hg condition, to yield 40 g of N,N-bis(trimethylsilyl)aminopropylmethyldiethoxysilane as a 130 to 135°C fraction.

### <Synthesis of primary amine modified butadiene rubber>

### (1) Production of polybutadiene

Under nitrogen, 1.4 kg of cyclohexane, 250 g of 1, 3-butadiene, and a 2,2-ditetrahydrofurylpropane (0.0285 mmol) cyclohexane solution were loaded into a 5-L autoclave replaced with nitrogen, and 2.85 mmol of n-butyllithium (BuLi) were added to the mixture. After that, the resultant mixture was subjected to polymerization in a hot water bath at 50°C equipped with a stirring apparatus for 4.5 hours. The reaction conversion degree of 1,3-butadiene was substantially 100%. The polymer solution was charged into a methanol solution containing 1.3 g of 2,6-di-tert-butyl-p-cresol to terminate polymerization. The resultant was then subjected to a solvent removal treatment by steam stripping and dried with a roll at 110°C to afford polybutadiene. The resulting polybutadiene was measured for its microstructure (vinyl bond amount), weight average molecular weight (Mw), and molecular weight distribution (Mw/Mn). As a result, the vinyl bond amount was 14%, Mw was 150,000, and Mw/Mn was 1.1.

### (2) Production of primary amine modified polybutadiene

The polymer solution obtained in the above section (1) was kept at a temperature of 50°C without deactivation of a polymerization catalyst, and 1129 mg (3.364 mmol) of N,N-bis(trimethylsilyl)aminopropylmethyldiethoxysilane having a protected primary amino group were added to the solution to carry out a modification reaction for 15 minutes. Finally, 2,6-di-tert-butyl-p-cresol was added to the polymer solution after the reaction. Next, the mixture was subjected to steam stripping to remove a solvent and deprotect the protected primary amino group. The resultant rubber was dried with a hot roll whose temperature has been adjusted to 110°C to afford a primary amine modified polybutadiene. The resultant modified polybutadiene was measured for its microstructure (vinyl bond amount), weight average molecular weight (Mw), molecular weight distribution (Mw/Mn), and primary amino group content. As a result, the vinyl bond amount was 14%, Mw was 150,000, Mw/Mn was 1.2, and the primary amino group content was 4.0 mmol/kg.

### Examples 1 to 9 and Comparative Examples 1 to 8

17 kinds of rubber compositions having blending compositions as shown in Table 1 were prepared and evaluated for their vulcanized rubber physical properties, i.e., steering stability (dry performance), fracture property, and rolling resistance. Table 1 shows the evaluation results.

[Table 1]

**Table 1**

| | | Example | | | | | | | | | Comparative Example | | | | | | | |
|---|---|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 | 7 | 8 |
| Blending composition (parts by mass) | Natural rubber | 85 | 85 | 60 | 80 | 85 | 50 | 85 | 85 | 85 | 85 | 85 | 50 | 85 | 85 | 85 | 85 | 85 |
| | Modified BR*1 | 15 | 15 | 40 | 10 | 15 | 50 | 15 | 15 | 15 | - | - | 50 | 5 | 15 | 15 | 15 | 15 |
| | BR*2 | - | - | - | 10 | - | - | - | - | - | 15 | 15 | - | 10 | - | - | - | - |
| | Carbon black*3 | 5 | 5 | 5 | 5 | 5 | 5 | 5 | 5 | 5 | 5 | 5 | 5 | 5 | 5 | 5 | 5 | 5 |
| | Silica*4 | - | - | - | - | 25 | - | 15 | - | - | 35 | - | 35 | 35 | 60 | 30 | - | - |
| | silica*5 | 35 | 50 | 35 | 35 | 10 | 35 | 20 | 100 | 120 | - | 35 | - | - | - | - | 130 | - |
| | Silica*6 | - | - | - | - | - | - | - | - | - | - | - | - | - | - | | - | 35 |
| | Silane coupling agent*7 | 3.5 | 5 | 3.5 | 3.5 | 3.5 | 3.5 | 3.5 | 10 | 12 | 3.5 | 3.5 | 3.5 , | 3.5 | 6 | 3.5 | 13 | 3.5 |
| | Stearic acid | 2 | 2 | 2 | 2 | 2 | 2 | 2 | 2 | 2 | 2 | 2 | 2 | 2 | 2 | 2 | 2 | 2 |
| | Antioxidant (TPPD)*8 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Zinc oxide | 2 | 2 | 2 | 2 | 2 | 2 | 2 | 2 | 2 | 2 | 2 | 2 | 2 | 2 | 2 | 2 | 2 |
| | Vulcanization accelerator (MBTS)*9 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | Vulcanization accelerator (CBS)*10 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| | Sulfur | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 |
| Tire performance | Rolling resistance (index) | 86 | 88 | 84 | 90 | 98 | 83 | 90 | 95 | 101 | 100 | 90 | 95 | 99 | 107 | 100 | 107 | 102 |
| | Dry performance (index) | 100 | 102 | 102 | 99 | 101 | 104 | 102 | 106 | 107 | 100 | 87 | 102 | 100 | 105 | 98 | 109 | 104 |
| | Fracture property (index) | 110 | 115 | 108 | 107 | 115 | 100 | 114 | 122 | 125 | 100 | 95 | 105 | 101 | 110 | 99 | 127 | 117 |

### [Remarks]

*1. Modified BR: the primary amine modified BR of Production Example 1 was used
*2. BR01: polybutadiene rubber manufactured by JSR Corporation
*3. Carbon black: N134, N₂SA (146 m²/g)
*4. Silica: "Nipseal AQ" manufactured by Tosoh Silica Corporation, CTAB: 155 m²/g, BET (N₂SA): 205 m²/g
*5. Silica: "Zeosil 1115 MP" manufactured by Rhodia Company, CTAB: 112 m²/g, BET (N₂SA) : 112 m²/g
*6. Silica: "Zeosil 1165 MP" manufactured by Rhodia Company, CTAB: 150 m²/g, BET (N₂SA): 165 m²/g
*7. Silane coupling agent: "Si69" manufactured by Degussa Company
*8. Antioxidant (TPPD) : N-isopropyl-N'-phenyl-p-phenylene diamine
*9. Vulcanization accelerator (MBTS): benzothiazyl disulfide
*10. Vulcanization accelerator (CBS): N-cyclohexyl-2-benzodiazolesulfenamide

### Industrial Applicability

The rubber composition of the present invention can provide a rubber composition including a modified polybutadiene rubber and silica having a specific particle diameter, the rubber composition being capable of providing a pneumatic tire which is excellent in fracture property and can have greatly reduced rolling resistance, and a pneumatic tire having the above-mentioned characteristics made using the rubber composition as a base rubber.

## Claims

1. A rubber composition, comprising:
(A) a rubber component including an amine-based functional group modified polybutadiene rubber; and
(B) silica having a cetyltrimethylammonium bromide (CTAB) adsorption specific surface area of 50 to 120 (m²/g) and having a nitrogen adsorption specific surface area (N₂SA), which is determined by a BET method, of 70 to 140 m²/g,
wherein the silica is blended in an amount of 20 to 120 parts by mass with respect to 100 parts by mass of the rubber component.

2. The rubber composition according to claim 1, wherein the modified polybutadiene rubber (A) comprises a protic amino group and/or a protected amino group as an amine-based functional group.

3. The rubber composition according to claim 1 or 2, wherein the modified polybutadiene rubber (A) further comprises a hydrocarbyloxysilane group.

4. The rubber composition according to claim 3, wherein the modified polybutadiene rubber (A) comprises a protic amino group and/or a protected amino group and a hydrocarbyloxysilane group.

5. The rubber composition according to claim 4, wherein the modified polybutadiene rubber (A) comprises a protic amino group and/or a protected amino group and a hydrocarbyloxysilane group at the same end of polymer.

6. The rubber composition according to any one of claims 2 to 5, wherein the protic amino group and/or the protected amino group comprises at least one kind of group selected from -NH₂, -NHR^{a}, -NL¹L², and -NR^{b}L³, provided that R^{a} and R^{b} each represent a hydrocarbon group, and L¹, L², and L³ each represent a hydrogen atom or a dissociable protective group.

7. A process for preparing a rubber composition, the rubber composition being according to any one of claims 3 to 6, wherein the modified polybutadiene rubber (A) is obtained by reacting an active ends of a conjugated diene polymer with a compound having a protected amino group and a hydrocarbyloxysilane group in a molecule to modify the polymer.

8. The process according to claim 7, wherein the compound having a protected amino group and a hydrocarbyloxysilane group in a molecule comprises a bifunctional silicon compound having a protected primary amino group.

9. The process according to claim 8, wherein the bifunctional silicon compound comprises at least one kind selected from a silicon compound represented by the general formula (I): 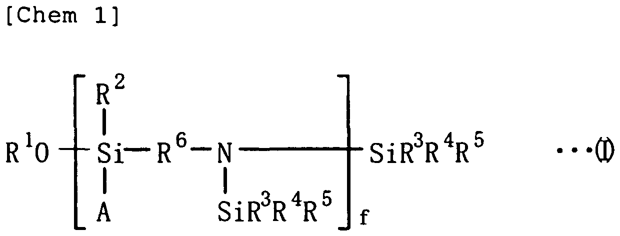 where: R¹ and R² each independently represent a hydrocarbon group having 1 to 20 carbon atoms, R³ to R⁵ each independently represent a hydrocarbon group having 1 to 20 carbon atoms, R⁶ represents an alkylene group having 1 to 12 carbon atoms, A represents a reactive group, and f represents an integer of 1 to 10;
a silicon compound represented by the general formula (II) : 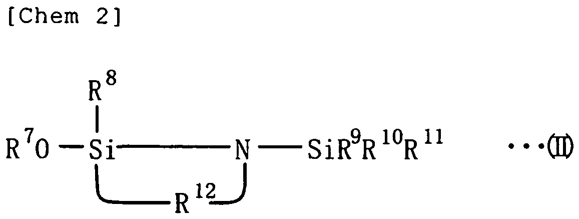 where: R⁷ to R¹¹ each independently represent a hydrocarbon group having 1 to 20 carbon atoms, and R¹² represents an alkylene group having 1 to 12 carbon atoms; and
a silicon compound represented by the general formula (III) : 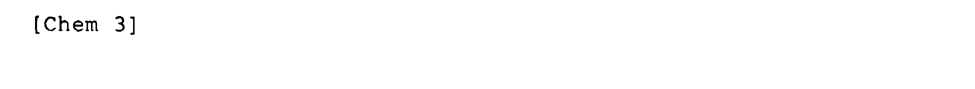 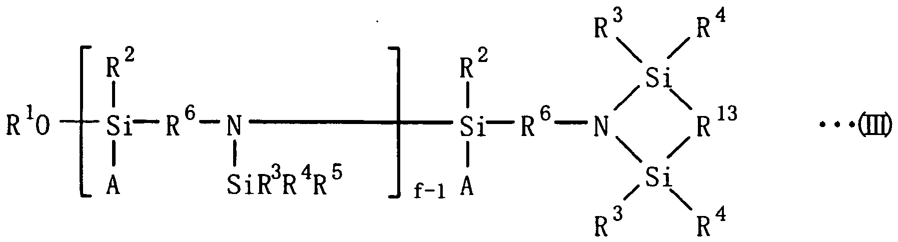 where: R¹ and R² each independently represent a hydrocarbon group having 1 to 20 carbon atoms, R³ to R⁵ each independently represent a hydrocarbon group having 1 to 20 carbon atoms, R⁶ represents an alkylene group having 1 to 12 carbon atoms, R¹³ represents an alkylene group having 1 to 12 carbon atoms, A represents a reactive group, and f represents an integer of 1 to 10.

10. The process according to claim 9, wherein A in the general formula (I) represents a halogen atom or an alkoxy group having 1 to 20 carbon atoms.

11. The process according to any one of claims 7 to 10, wherein the modified polybutadiene rubber is obtained by reacting active ends of polymer with a compound having a protected amino group and a hydrocarbyloxysilane group in a molecule to modify the polymer, followed by conducting condensation reaction involving said compound in a presence of a titanium-based condensation accelerator comprising a titanium compound.

12. The process according to claim 11, wherein the titanium-based condensation accelerator comprises at least one kind selected from a titanium alkoxide, a titanium carboxylic acid salt, and a titanium acetylacetonato complex salt.

13. The rubber composition according to any one of claims 1 to 6 or obtainable by the process of any one of claims 7 to 12, comprising a silane coupling agent (C), wherein the silane coupling agent is blended in an amount of 2 to 15 mass% with respect to the silica as the component (B).

14. The rubber composition according to claim 13, wherein the silane coupling agent as the component (C) is represented by the following general formula (IV):
[Chem 4] R¹⁴_{y}R¹⁵_{y}R¹⁶_{z}SiR¹⁷-S-CO-R¹⁸ (lV)
where: R¹⁴ represents R¹⁹O-, R¹⁹C(=O)O-, R¹⁹R²⁰C=NO-, R¹⁹R²⁰N-, or - (OSiR¹⁹R²⁰)ₘ(OSiR¹⁸R¹⁹R²⁰), provided that R¹⁹ and R²⁰ each independently represent a hydrogen atom or a monovalent hydrocarbon group having 1 to 18 carbon atoms; R¹⁵ represents R¹⁴, a hydrogen atom, or a monovalent hydrocarbon group having 1 to 18 carbon atoms; R¹⁶ represents R¹⁴, R¹⁵, or an -[O(R²¹O)ₐ]_{0.5}- group, provided that R²¹ represents an alkylene group having 1 to 18 carbon atoms, and a represents an integer of 1 to 4; R¹⁷ represents a divalent hydrocarbon group having 1 to 18 carbon atoms; R¹⁸ represents a monovalent hydrocarbon group having 1 to 18 carbon atoms; and x, y, and z are numbers satisfying relationships of x+y+2z=3, 0≤x≤3, 0≤y≤2, and 0≤z≤1.

15. The rubber composition according to any one of claims 1 to 6, 13 or 14, or obtainable by the process of any one of claims 7 to 12, further including carbon black (D).

16. The rubber composition according to any one of claims 1 to 6, 13 to 15, or obtainable by the process of any one of claims 7 to 12, wherein the rubber component comprises: 10 to 40 mass% of the modified polybutadiene rubber (A); and 60 to 90 mass% of at least one kind selected from a natural rubber, a synthetic isoprene rubber, a butadiene rubber, a styrene-butadiene rubber, an ethylene-α-olefin copolymer rubber, an ethylene-α-olefin-diene copolymer rubber, a chloroprene rubber, a halogenated butyl rubber, and a copolymer of styrene having a halogenated methyl group and isobutylene.

17. Apneumatic tire, wherein the rubber composition according to any one claims 1 to 6, 13 to 16, or obtainable by the process of any one of claims 7 to 12 is used as a base rubber.

## Patentansprüche

1. Kautschukzusammensetzung umfassend:
(A) eine Kautschukkomponente, die einen durch eine funktionelle Gruppe auf Aminbasis modifizierten Polybutadienkautschuk umfasst; und
(B) Siliciumdioxid, das einen Cetyltrimethylammoniumbromid- (CTAB-) adsorptionsspezifischen Oberflächenbereich von 50 bis 120 (m²/g) und einen Stickstoffadsorption-spezifischen Oberflächenbereich (N₂SA), der durch eine BET-Methode bestimmt wird, von 70 bis 140 m²/g aufweist,
wobei das Siliciumdioxid in einer Menge von 20 bis 120 Massenteilen mit Bezug auf 100 Massenteile der Kautschukkomponente vermischt ist.

2. Kautschukzusammensetzung nach Anspruch 1, wobei der modifizierte Polybutadienkautschuk (A) eine protische Aminogruppe und/oder eine geschützte Aminogruppe als funktionelle Gruppe auf Aminbasis umfasst.

3. Kautschukzusammensetzung nach Anspruch 1 oder 2, wobei der modifizierte Polybutadienkautschuk (A) des Weiteren eine Hydrocarbyloxysilangruppe umfasst.

4. Kautschukzusammensetzung nach Anspruch 3, wobei der modifizierte Polybutadienkautschuk (A) eine protische Aminogruppe und/oder eine geschützte Aminogruppe und eine Hydrocarbyloxysilangruppe umfasst.

5. Kautschukzusammensetzung nach Anspruch 4, wobei der modifizierte Polybutadienkautschuk (A) eine protische Aminogruppe und/oder eine geschützte Aminogruppe und eine Hydrocarbyloxysilangruppe an demselben Ende des Polymers umfasst.

6. Kautschukzusammensetzung nach einem der Ansprüche 2 bis 5, wobei die protische Aminogruppe und/oder die geschützte Aminogruppe mindestens eine Art Gruppe umfasst ausgewählt unter NH₂, -NHR^{a}, -NL¹L² und NR^{b}L³, vorausgesetzt, dass R^{a} und R^{b} jeweils eine Kohlenwasserstoffgruppe darstellen und L¹, L² und L³ jeweils ein Wasserstoffatom oder eine dissoziierbare Schutzgruppe darstellen.

7. Verfahren zur Herstellung einer Kautschukzusammensetzung, wobei die Kautschukzusammensetzung einem der Ansprüche 3 bis 6 entspricht, wobei der modifizierte Polybutadienkautschuk (A) durch Reagieren aktiver Enden eines konjugierten Dienpolymers mit einer Verbindung erhalten wird, die eine geschützte Aminogruppe und eine Hydroxycarbyloxysilangruppe in einem Molekül aufweist, um das Polymer zu modifizieren.

8. Verfahren nach Anspruch 7, wobei die Verbindung, die eine geschützte Aminogruppe und eine Hydrocarbyloxysilangruppe in einem Molekül aufweist, eine bifunktionelle Siliciumverbindung umfasst, die eine geschützte primäre Aminogruppe aufweist.

9. Verfahren nach Anspruch 8, wobei die bifunktionelle Siliciumverbindung mindestens eine Art umfasst ausgewählt von einer Siliciumverbindung, die durch die allgemeine Formel (I) dargestellt ist: 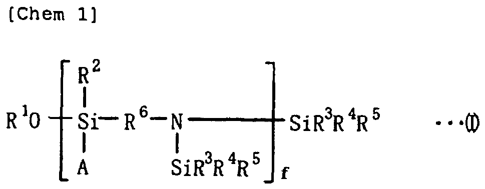 wobei: R¹ und R² jeweils unabhängig eine Kohlenwasserstoffgruppe darstellen, die 1 bis 20 Kohlenstoffatome aufweist, R³ bis R⁵ jeweils unabhängig eine Kohlenwasserstoffgruppe darstellen, die 1 bis 20 Kohlenstoffatome aufweist, R⁶ eine Alkylengruppe darstellt, die 1 bis 12 Kohlenstoffatome aufweist, A eine reaktive Gruppe darstellt und f eine ganze Zahl von 1 bis 10 darstellt;
einer Siliciumverbindung, die durch die allgemeine Formel (II) dargestellt ist: 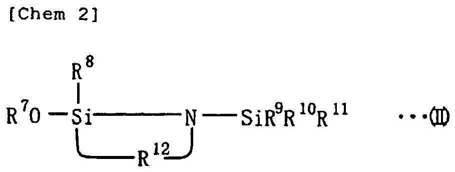 wobei: R⁷ bis R¹¹ jeweils unabhängig eine Kohlenwasserstoffgruppe darstellen, die 1 bis 20 Kohlenstoffatome aufweist, und R¹² eine Alkylengruppe darstellt, die 1 bis 12 Kohlenstoffatome aufweist; und
einer Siliciumverbindung, die durch die allgemeine Formel (III) dargestellt ist: 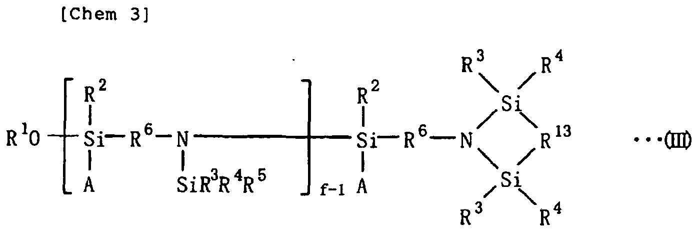 wobei: R¹ und R² jeweils unabhängig eine Kohlenwasserstoffgruppe darstellen, die 1 bis 20 Kohlenstoffatome aufweist, R³ bis R⁵ jeweils unabhängig eine Kohlenwasserstoffgruppe darstellen, die 1 bis 20 Kohlenstoffatome aufweist, R⁶ eine Alkylengruppe darstellt, die 1 bis 12 Kohlenstoffatome aufweist, R¹³ eine Alkylengruppe darstellt, die 1 bis 12 Kohlenstoffatome aufweist, A eine reaktive Gruppe darstellt und f eine ganze Zahl von 1 bis 10 darstellt.

10. Verfahren nach Anspruch 9, wobei A in der allgemeinen Formel (I) ein Halogenatom oder eine Alkoxygruppe darstellt, die 1 bis 20 Kohlenstoffatome aufweist.

11. Verfahren nach einem der Ansprüche 7 bis 10, wobei der modifizierte Polybutadienkautschuk durch Reagieren aktiver Enden von Polymer mit einer Verbindung, die eine geschützte Aminogruppe und eine Hydrocarbyloxysilangruppe in einem Molekül aufweist, zum Modifizieren des Polymers, gefolgt vom Durchführen einer Kondensationsreaktion, die die Verbindung in Gegenwart eines Kondensationsbeschleunigers auf Titanbasis involviert, der eine Titanverbindung umfasst, erhalten wird.

12. Verfahren nach Anspruch 11, wobei der Kondensationsbeschleuniger auf Titanbasis mindestens eine Art umfasst ausgewählt unter einem Titanalkoxid, einem Titancarbonsäuresalz und einem Titanacetylacetonat-Komplexsalz.

13. Kautschukzusammensetzung nach einem der Ansprüche 1 bis 6 oder erhältlich durch das Verfahren nach einem der Ansprüche 7 bis 12, umfassend ein Silankopplungsmittel (C), wobei das Silankopplungsmittel in einer Menge von 2 bis 15 Masse-%, mit Bezug auf das Siliciumdioxid, als Komponente (B) vermischt ist.

14. Kautschukzusammensetzung nach Anspruch 13, wobei das Silankopplungsmittel als Komponente (C) durch die folgende allgemeine Formel (IV) dargestellt ist:
[Chem 4] R¹⁴ₓR¹⁵_{y}R¹⁶_{z}SiR¹⁷-S-CO-R¹⁸ (IV)
wobei: R¹⁴ R¹⁹O-, R¹⁹C(=O)O-, R¹⁹R²⁰C=NO-, R¹⁹R²⁰N- oder - (OSiR¹⁹R²⁰)ₘ(OSiR¹⁸R¹⁹R²⁰) darstellt, vorausgesetzt, dass R¹⁹ und R²⁰ jeweils unabhängig ein Wasserstoffatom oder eine einwertige Kohlenwasserstoffgruppe darstellen, die 1 bis 18 Kohlenstoffatome aufweist; R¹⁵ R¹⁴, ein Wasserstoffatom oder eine einwertige Kohlenwasserstoffgruppe darstellt, die 1 bis 18 Kohlenstoffatome aufweist; R¹⁶ R¹⁴, R¹⁵ oder eine -[O(R²¹O)ₐ]_{0,5}-Gruppe darstellt, vorausgesetzt, dass R²¹ eine Alkylengruppe darstellt, die 1 bis 18 Kohlenstoffatome aufweist, und a eine ganze Zahl von 1 bis 4 ist; R¹⁷ eine zweiwertige Kohlenwasserstoffgruppe darstellt, die 1 bis 18 Kohlenstoffatome aufweist; R¹⁸ eine einwertige Kohlenwasserstoffgruppe darstellt, die 1 bis 18 Kohlenstoffatome aufweist; und x, y und y Zahlen sind, die den Beziehungen x+y+2z=3, 0 ≤ x ≤ 3, 0 ≤ y ≤ 2 und 0 ≤ z ≤ 1 entsprechen.

15. Kautschukzusammensetzung nach einem der Ansprüche 1 bis 6, 13 oder 14 oder erhältlich durch das Verfahren nach einem der Ansprüche 7 bis 12, des weiteren Ruß (D) umfassend.

16. Kautschukzusammensetzung nach einem der Ansprüche 1 bis 6, 13 bis 15 oder erhältlich durch das Verfahren nach einem der Ansprüche 7 bis 12, wobei die Kautschukkomponente Folgendes umfasst: 10 bis 40 Masse-% des modifizierten Polybutadienkautschuks (A); und 60 bis 90 Masse-% mindestens einer Art ausgewählt unter Naturkautschuk, einem synthetischem Isoprenkautschuk, einem Butadienkautschuk, einem Styrol-Butadien-Kautschuk, einem Ethylen-α-olefin-Copolymer-Kautschuk, einem Ethylen-α-Olefin-Dien-Copolymer-Kautschuk, einem Chloroprenkautschuk, einem halogenierten Butylkautschuk und einem Copolymer von Styrol, das eine halogenierte Methylgruppe aufweist, und Isobutylen.

17. Luftreifen, wobei die Kautschukzusammensetzung nach einem der Ansprüche 1 bis 6, 13 bis 16 oder erhältlich durch das Verfahren nach einem der Ansprüche 7 bis 12, als Basiskautschuk verwendet wird.

## Revendications

1. Composition de caoutchouc, comprenant:
(A) un composant de caoutchouc incluant un caoutchouc de polybutadiène modifié par un groupe fonctionnel à base d' amine; et
(B) une silice possédant une surface spécifique d'adsorption de bromure de cétyltriméthylammonium (CTAB) de 50 à 120 (m²/g) et possédant une surface spécifique d'adsorption d'azote (N₂SA), qui est déterminée par une méthode BET, de 70 à 140 m²/g,
dans laquelle la silice est mélangée dans une quantité de 20 à 120 parties en poids par rapport à 100 parties en poids du composant de caoutchouc.

2. Composition de caoutchouc selon la revendication 1, dans laquelle le caoutchouc de polybutadiène modifié (A) comprend un groupe amino protique et/ou un groupe amino protégé en tant que groupe fonctionnel à base d'amine.

3. Composition de caoutchouc selon la revendication 1 ou 2, dans laquelle le caoutchouc de polybutadiène modifié (A) comprend en outre un groupe hydrocarbyloxysilane.

4. Composition de caoutchouc selon la revendication 3, dans laquelle le caoutchouc de polybutadiène modifié (A) comprend un groupe amino protique et/ou un groupe amino protégé et un groupe hydrocarbyloxysilane.

5. Composition de caoutchouc selon la revendication 4, dans laquelle le caoutchouc de polybutadiène modifié (A) comprend un groupe amino protique et/ou un groupe amino protégé et un groupe hydrocarbyloxysilane à la même extrémité de polymère.

6. Composition de caoutchouc selon l'une quelconque des revendications 2 à 5, dans laquelle le groupe amino protique et/ou le groupe amino protégé comprend au moins un type de groupe choisi parmi -NH₂, -NHR^{a}, -NL¹L² et -Nk^{b}L³ à condition que R^{a} et R^{b} représentent chacun un groupe hydrocarbure et L¹, L² et L³ représentent chacun un atome d'hydrogène ou un groupe protecteur dissociable.

7. Procédé pour la préparation d'une composition de caoutchouc, la composition de caoutchouc étant selon l'une quelconque des revendications 3 à 6, dans lequel le caoutchouc de polybutadiène modifié (A) est obtenu par la réaction d'extrémités actives d'un polymère de diène conjugué avec un composé possédant un groupe amino protégé et un groupe hydrocarbyloxysilane dans une molécule pour modifier le polymère.

8. Procédé selon la revendication 7, dans lequel le composé possédant un groupe amino protégé et un groupe hydrocarbyloxysilane dans une molécule comprend un composé de silicium bifonctionnel possédant un groupe amino primaire protégé.

9. Procédé selon la revendication 8, dans lequel le composé de silicium bifonctionnel comprend au moins un type choisi parmi un composé de silicium représenté par la formule générale (I): 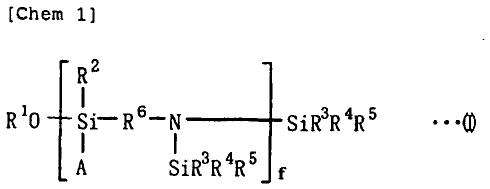 dans laquelle: R¹ et R² représentent chacun indépendamment un groupe hydrocarbure possédant de 1 à 20 atomes de carbone, R³ à R⁵ représentent chacun indépendamment un groupe hydrocarbure possédant de 1 à 20 atomes de carbone, R⁶ représente un groupe alkylène possédant de 1 à 12 atomes de carbone, A représente un groupe réactif et f représente un nombre entier de 1 à 10;
un composé de silicium représenté par la formule générale (II): 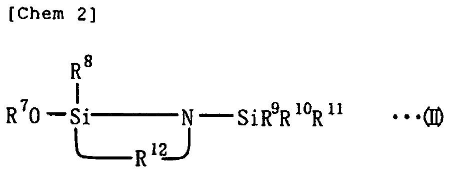 dans laquelle: R⁷ à R¹¹ représentent chacun indépendamment un groupe hydrocarbure possédant de 1 à 20 atomes de carbone et R¹² représente un groupe alkylène possédant de 1 à 12 atomes de carbone; et
un composé de silicium représenté par la formule générale (III): 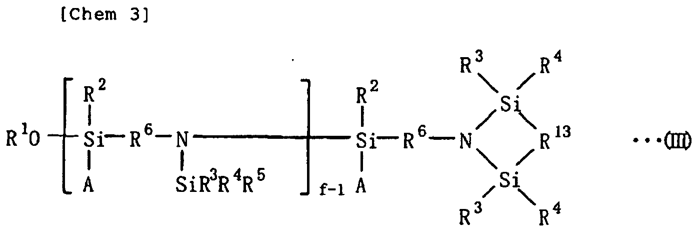 dans laquelle: R¹ et R² représentent chacun indépendamment un groupe hydrocarbure possédant de 1 à 20 atomes de carbone, R³ à R⁵ représentent chacun indépendamment un groupe hydrocarbure possédant de 1 à 20 atomes de carbone, R⁶ représente un groupe alkylène possédant de 1 à 12 atomes de carbone, R¹³ représente un groupe alkylène possédant de 1 à 12 atomes de carbone, A représente un groupe réactif et f représente un nombre entier de 1 à 10.

10. Procédé selon la revendication 9, dans lequel A dans la formule générale (I) représente un atome d'halogène ou un groupe alcoxy possédant de 1 à 20 atomes de carbone.

11. Procédé selon l'une quelconque des revendications 7 à 10, dans lequel le caoutchouc de polybutadiène modifié est obtenu par la réaction d'extrémités actives de polymère avec un composé possédant un groupe amino protégé et un groupe hydrocarbyloxysilane dans une molécule pour modifier le polymère, suivie par la conduite d'une réaction de condensation impliquant ledit composé en présence d'un accélérateur de condensation à base de titane comprenant un composé de titane.

12. Procédé selon la revendication 11, dans lequel l'accélérateur de condensation à base de titane comprend au moins un type choisi parmi un alcoxyde de titane, un sel d'acide carboxylique de titane et un sel complexe d'acétylacétonato de titane.

13. Composition de caoutchouc selon l'une quelconque des revendications 1 à 6 ou pouvant être obtenue par le procédé selon l'une quelconque des revendications 7 à 12, comprenant un agent de couplage de silane (C), où l'agent de couplage de silane est mélangé dans une quantité de 2 à 15% en poids par rapport à la silice en tant que composant (B).

14. Composition de caoutchouc selon la revendication 13, dans laquelle l'agent de couplage de silane en tant composant (C) est représenté par la formule générale (IV) suivante:
[Chem 4] R¹⁴ₓR¹⁵_{y}R¹⁶_{z}SiR¹⁷-S-CO-R¹⁸ (IV)
dans laquelle: R¹⁴ représente R¹⁹O-, R¹⁹C(=O)O-, R¹⁹R²⁰C=NO-, R¹⁹R²⁰N- ou - (OSiR¹⁹R²⁰)ₘ(OSiR¹⁸R¹⁹R²⁰), à condition que R¹⁹ et R²⁰ représentent chacun indépendamment un atome d'hydrogène ou un groupe hydrocarbure monovalent possédant de 1 à 18 atomes de carbone; R¹⁵ représente R¹⁴, un atome d'hydrogène ou un groupe hydrocarbure monovalent possédant de 1 à 18 atomes de carbone; R¹⁶ représente R¹⁴, R¹⁵ ou un groupe -[O(R²¹O)ₐ]_{0,5}-, à condition que R²¹ représente un groupe alkylène possédant de 1 à 18 atomes de carbone et a représente un nombre entier de 1 à 4; R¹⁷ représente un groupe hydrocarbure divalent possédant de 1 à 18 atomes de carbone; R¹⁸ représente un groupe hydrocarbure monovalent possédant de 1 à 18 atomes de carbone; et x, y et z sont des nombres satisfaisant les relations de x + y + 2z = 3, 0 ≤ x ≤ 3, 0 ≤ y ≤ 2 et 0 ≤ z ≤ 1.

15. Composition de caoutchouc selon l'une quelconque des revendications 1 à 6, 13 ou 14, ou pouvant être obtenue par le procédé selon l'une quelconque des revendications 7 à 12, incluant en outre un noir de carbone (D).

16. Composition de caoutchouc selon l'une quelconque des revendications 1 à 6, 13 à 15, ou pouvant être obtenue par le procédé selon l'une quelconque des revendications 7 à 12, dans laquelle le composant de caoutchouc comprend: de 10 à 40% en poids du caoutchouc de polybutadiène modifié (A); et de 60 à 90% en poids d'au moins un type choisi parmi un caoutchouc naturel, un caoutchouc d'isoprène synthétique, un caoutchouc de butadiène, un caoutchouc de styrène-butadiène, un caoutchouc de copolymère d'éthylène-oléfine α, un caoutchouc de copolymère d'éthylène-oléfine α-diène, un caoutchouc de chloroprène, un caoutchouc de butyle halogéné et un copolymère de styrène possédant un groupe méthyle halogéné et un isobutylène.

17. Bandage pneumatique, dans lequel la composition de caoutchouc selon l'une quelconque des revendications 1 à 6, 13 à 16, ou pouvant être obtenue par le procédé selon l'une quelconque des revendications 7 à 12, est utilisée en tant que caoutchouc de base.
